# EUROPÄISCHE PATENTSCHRIFT

(11) **EP 2 367 646 B1**
(45) Veröffentlichungstag und Bekanntmachung des Hinweises auf die Patenterteilung: **26.09.2012**
(21) Anmeldenummer: 09799001.4
(22) Anmeldetag: 14.12.2009
(51) Int. Cl.: B21H 5/02, B21K 1/30

(54) **VERFAHREN UND VORRICHTUNG ZUR HINTERLEGUNG DER INNENVERZAHNUNG EINER PULVERMETALLURGISCH HERGESTELLTEN SCHIEBEMUFFE FÜR EIN SCHALTGETRIEBE**
METHOD AND APPARATUS FOR BACKING THE INSIDE TEETH OF A SLIDING SLEEVE PRODUCED BY WAY OF POWDER METALLURGY FOR A MANUAL TRANSMISSION
PROCÉDÉ ET DISPOSITIF POUR LE RENFORCEMENT DE LA DENTURE INTÉRIEURE D'UN MANCHON COULISSANT, FABRIQUÉ PAR MÉTALLURGIE DES POUDRES, POUR UNE BOÎTE DE VITESSES MÉCANIQUE

(30) Priorität: 16.12.2008 AT 19622008
(43) Veröffentlichungstag der Anmeldung: 28.09.2011
(73) Patentinhaber: Miba Sinter Austria GmbH, 4663 Laakirchen (AT)
(72) Erfinder: MÜLLER, Alexander, A-4813 Altmünster (AT); PAMMINGER, Helmut, A-4840 Vöcklabruck (AT)
(74) Vertreter: Hübscher, Helmut
(86) Internationale Anmeldenummer: PCT/AT2009/000484
(87) Internationale Veröffentlichungsnummer: WO 2010/075600

(56) Entgegenhaltungen:
- DE-A1- 10 250 432
- DE-A1- 19 604 386
- DE-A1- 19 809 039
- DE-A1- 19 850 326

## Beschreibung

Die Erfindung bezieht sich auf ein Verfahren zur Hinterlegung der Innenverzahnung einer pulvermetallurgisch hergestellten Schiebemuffe für ein Schaltgetriebe, wobei die Hinterlegungen der stirnseitige Dachschrägen bildenden Zähne mit Hilfe eines Rollwerkzeugs durch ein Hinterrollen unter plastischer Materialverdrängung aus dem Hinterlegungsbereich geformt werden.

Ausnehmungen im Bereich der Zahnflanken der Innenverzahnung ringförmiger Bauteile werden als Hinterlegung bezeichnet, wenn Sie nicht mit zur Ringachse achsparalleler Werkzeugzustellung gefertigt werden können, sondern ein Anstellen des Werkzeugs an das Werkstück radial nach außen erfordern. Solche Hinterlegungen der Innenverzahnung von Schiebemuffen für Schaltgetriebe werden aus Kostengründen häufig durch ein Hinterrollen unter einer plastischen Materialverdrängung aus dem Hinterlegungsbereich gefertigt (DE 198 50 326 A1), wobei sich unerwünschte geometrische Verformungen und Gratbildungen im Zahnbereich nicht vermeiden lassen, sodass eine aufwendige Nachbearbeitung notwendig wird. Um diese Nachteile zu vermeiden, wurde bereits vorgeschlagen (DE 198 09 039 A1, DE 101 22 184 A1), im Zahnkopfbereich Freiräume zu schaffen, in die das plastifizierte Material verdrängt werden kann, um Materialanhäufungen im Bereich von Funktionsflächen der Schiebemuffe zu vermeiden. Trotz dieser Maßnahme konnten jedoch höheren Anforderungen entsprechende Hinterlegungen nicht mit Rollwerkzeugen gefertigt werden, sodass in solchen Fällen auf ein Fräsen der Hinterlegungen ausgewichen wird (DE 102 50 432 A1).

Der Erfindung liegt somit die Aufgabe zugrunde, ein Verfahren der eingangs geschilderten Art zur Hinterlegung der Innenverzahnung einer pulvermetallurgisch hergestellten Schiebemuffe für ein Schaltgetriebe so auszugestalten, dass nach dem Hinterrollen der Hinterlegungen ein maßhaltiges, weitgehend gratfreies Werkstück ohne aufwendige Nachbearbeitung erhalten wird.

Die Erfindung löst die gestellte Aufgabe dadurch, dass mit Hilfe des Rollwerkzeugs für die Formung der Hinterlegungen zugleich die durch die Hinterlegungen begrenzten, stirnseitigen Zahnabschnitte unter Ausformung und/oder Kalibrierung der zugehörigen Dachschrägen kalibriert werden.

Da zufolge dieser Maßnahmen nicht nur der Hinterlegungsbereich hinterrollt, sondern auch die durch die Hinterlegungen begrenzten, stirnseitigen Zahnabschnitte einer plastischen Verformung unterworfen werden, die zumindest eine Kalibrierung dieser mit stirnseitigen Dachschrägen versehenen Zahnabschnitte bewirkt, wenn nicht die Dachschrägen erst mit dem Rollwerkzeug geformt werden, kann die plastische Materialverdrängung über den gesamten stirnseitigen Zahnabschnitt mit der Wirkung besser gesteuert werden, dass die Formgenauigkeit und Funktionstüchtigkeit einschränkende Materialanhäufungen und damit Gratbildungen vermieden werden. Es wird daher möglich, Hinterlegungen der Innenverzahnung von Schiebemuffen ohne Fräsbearbeitung mit Hilfe eines Rollwerkzeugs unter Bedingungen einer Serienfertigung ausreichend maßhaltig herzustellen, um auch höheren Anforderungen an die Genauigkeit zu genügen.

Um das Fließen des plastifizierten Materials in einer gewünschten Form zu unterstützen, kann das Rollwerkzeug oszillierend an die Innenverzahnung der Schiebemuffe angedrückt werden, wobei die Amplitude und Richtung der Schwingungen bzw. Impulse in Abhängigkeit insbesondere vom Werkstoff und der herzustellenden Form zu wählen sind. Eine solche Oszillation des Rollwerkzeugs kann auch durch ein entsprechendes Taumeln des Rollwerkzeugs erreicht werden.

Das Rollwerkzeug kann in herkömmlicher Weise mit einer zur Achse der Schiebemuffe parallelen Drehachse angeordnet werden, was jedoch den Nachteil mit sich bringt, dass die Beaufschlagungskräfte durch das Rollwerkzeug radial nach außen gerichtet sind. Damit Verformungskräfte mit einer stärker ausgeprägten Komponente in Achsrichtung für den Verformungsvorgang genützt werden können, können die Drehachsen des Rollwerkzeugs und der Schiebemuffe miteinander einen spitzen Winkel einschließen, sodass die radiale Beaufschlagung des Rollwerkzeugs bezüglich der zu bearbeitenden Schiebemuffe Kraftkomponenten in radialer und axialer Richtung mit sich bringt. Die bezüglich der Schiebemuffe geneigte Anordnung des Rollwerkzeugs stellt darüber hinaus vorteilhafte Voraussetzungen für den gleichzeitigen Einsatz von zwei Rollwerkzeugen dar, wodurch der Bearbeitungsvorgang entsprechend beschleunigt werden kann.

Zur Durchführung des Verfahrens kann von einer üblichen Vorrichtung zur Hinterlegung der Innenverzahlung einer pulvermetallurgisch hergestellten Schiebemuffe für ein Schaltgetriebe mit einem entsprechend der Hinterlegung profilierten Rollwerkzeug ausgegangen werden, wenn das Rollwerkzeug einen an die Profilform für die Hinterlegung anschließenden Profilabschnitt aufweist, der der Endform der durch die Hinterlegungen begrenzten, stirnseitigen Zahnabschnitte der Innenverzahnung entspricht. In diesem Fall wird nicht nur die Hinterlegung in den Zahnkopf eingerollt, sondern zugleich auch der durch die Hinterlegung vom übrigen Zahn gesonderte stirnseitige Zahnabschnitt bearbeitet, sodass sich entlang dieses Zahnabschnitts keine durch eine örtliche Begrenzung des Rollwerkzeugs bedingten Materialanhäufungen ergeben können. Die sich über den gesamten stirnseitigen Zahnabschnitt einschließlich der Hinterlegung erstreckende Profilform des Rollwerkzeugs bedingt außerdem eine die gewünschte Maßhaltigkeit sichernde Kalibrierung dieser Zahnbereiche.

Anhand der Zeichnung wird das erfindungsgemäße Verfahren näher erläutert. Es zeigen:
- Fig. 1: eine erfindungsgemäße Vorrichtung zur Hinterlegung der Innenverzahnung einer pulvermetallurgisch hergestellten Schiebemuffe für ein Schaltgetriebe in einem schematischen Axialschnitt durch die Schiebemuffe mit einem zur Schiebemuffe parallelen Rollwerkzeug und die
- Fig. 2: bis 4 der Fig. 1 entsprechende Darstellungen der möglichen Anordnung von Rollwerkzeugen mit zur Achse der Schiebemuffe geneigt verlaufender Drehachse.

Die mit Hinterlegungen 1 herzustellende Innenverzahnung 2 einer Schiebemuffe 3 für ein herkömmliches Schaltgetriebe, beispielsweise eines Kraftfahrzeugs, wird bei der durch ein entsprechendes Sintern eines formgepressten Eisenwerkstoffs pulvermetallurgisch hergestellten Schiebemuffe 3 durch über die Muffenbreite axial durchgehende Zähne 4 gebildet, die gemäß dem dargestenten Ausführungsbeispiel an einer Stirnseite eine Vorform für eine spätere Dachschräge aufweisen, im Übrigen aber achsparallele Flanken und einen achsparallelen Kopf aufweisen. Um die Hinterlegungen 1 mit Hilfe eines Rollwerkzeuges 5 durch eine plastische Materialverdrängung hinterrollen zu können, weist das Profilwerkzeug eine an die Endform der Zähne 4 angepasste Profilform mit einem die Hinterlegungen 1 bestimmenden Profil 6 und einem daran anschließenden, stirnseitigen Profilabschnitt 7 auf, der der Umrissform des durch die Hinterlegung 1 vom übrigen Zahn gesonderten, stirnseitigen Zahnabschnitt 8 entspricht und daher auch die stirnseitige Dachschräge 9 der Innenverzahnung 2 in ihrer Endform zumindest kalibriert, wenn nicht formt.

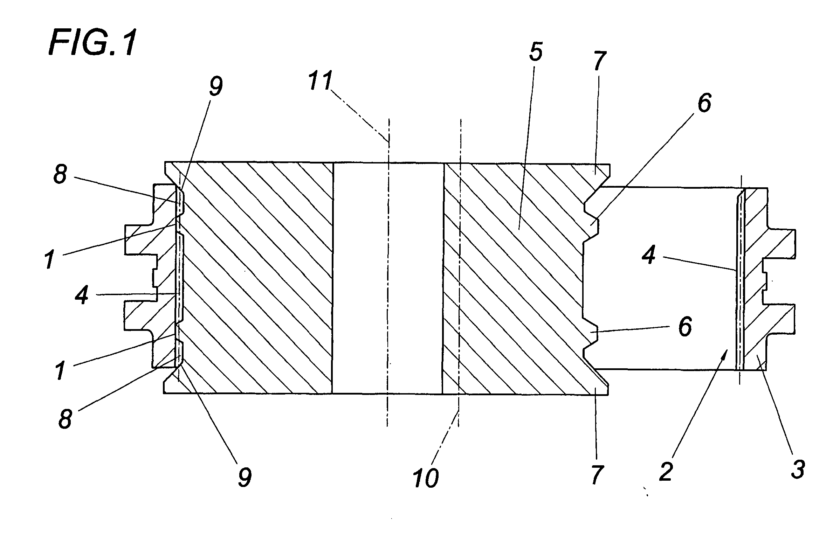

In der Fig. 1 ist das Rollwerkzeug 5 mit zur Achse 10 der Schiebemuffe 3 paralleler Drehachse 11 angeordnet, sodass mit einem Rollwerkzeug 5 die einander gegenüberliegenden stirnseitigen Zahnabschnitte 8 der Zähne 4 der Innenverzahnung 2 gleichzeitig geformt werden können. Dies bedeutet eine entsprechende Druckbeaufschlagung des Rollwerkzeugs 5 in radialer Richtung gegenüber der Schiebemuffe 3, die in einem aus Übersichtlichkeitsgründen nicht dargestellten Werkstückhalter so eingespannt ist, dass ein Aufweiten der Schiebemuffe 3 unterbunden wird, was jedoch eine bekannte Maßnahme darstellt, die aus Übersichtlichkeitsgründen nicht eingezeichnet ist.

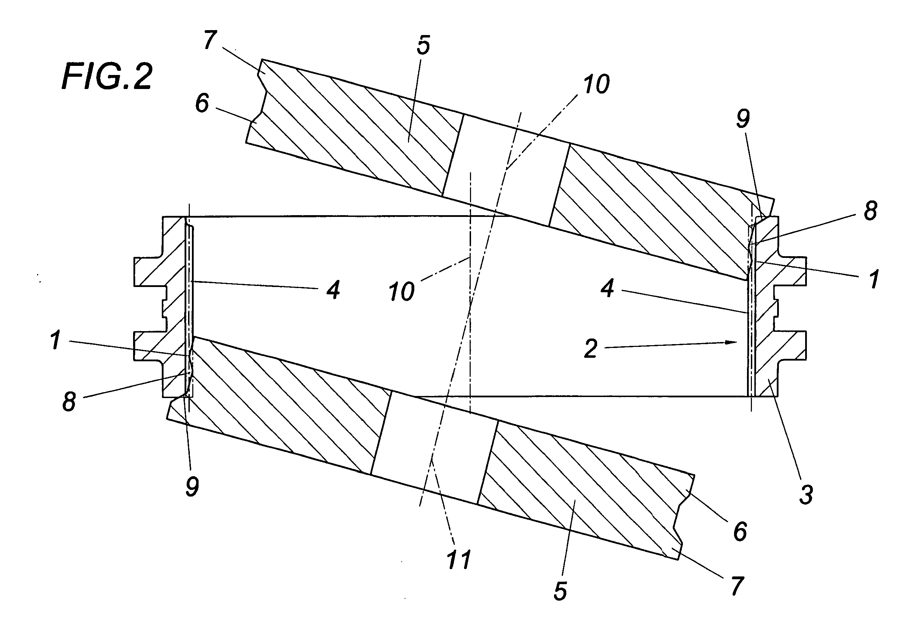

Die Fig. 2 bis 4 zeigen zum Unterschied zu der Fig. 1 den Einsatz von Rollwerkzeugen 5 mit einer Drehachse 11, die zur Drehachse 10 der Schiebemuffe 3 einen spitzen Winkel einschließen. Aufgrund dieser geneigten Anstellung der Rollwerkzeuge 5 an die mit einer Hinterlegung 1 zu versehenden Schiebemuffe 3 wird die radiale Beaufschlagung der Rollwerkzeuge 5 in Kraftkomponenten aufgeteilt, die bezüglich der Schaltmuffe 3 in radialer und axialer Richtung wirksam werden, sodass sich im Vergleich zum Rollwerkzeug 5 mit paralleler Ausrichtung ein günstigerer Kraftangriff für die plastische Materialverdrängung ergibt. Unabhängig von der Neigungslage des Rollwerkzeugs 5 gegenüber der zu bearbeitenden Schiebemuffe 3 werden die stirnseitigen Zahnabschnitte 8 durch die Profilform der Rollwerkzeuge 5 über ihre gesamte Länge zumindest einer Kalibrierung unterworfen, sodass aufgrund des durchgehenden Formschlusses Materialanhäufungen vermieden werden, die die Genauigkeit und Funktion der stirnseitigen Zahnabschnitte 8 beeinträchtigen können.

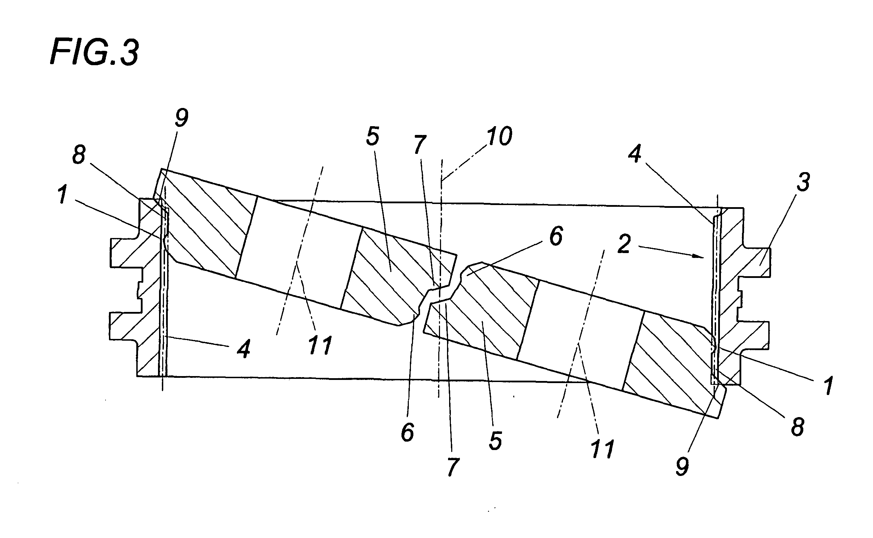

In der Fig. 2 ist die Anordnung von zwei Rollwerkzeugen 5 unter einer gleichgerichteten Neigung der Drehachsen 11 in Bezug auf die Muffenachse 10 dargestellt, wobei die Rollwerkzeuge 5 gegeneinander parallel versetzt sind, was entsprechend große Durchmesser der Rollwerkzeuge 5 erlaubt. Wie die Fig. 3 erkennen lässt, können diese Rollwerkzeuge 5 auch in einer gemeinsamen Ebene angeordnet werden, allerdings mit einem gegenüber der Fig. 2 verringerten Durchmesser.

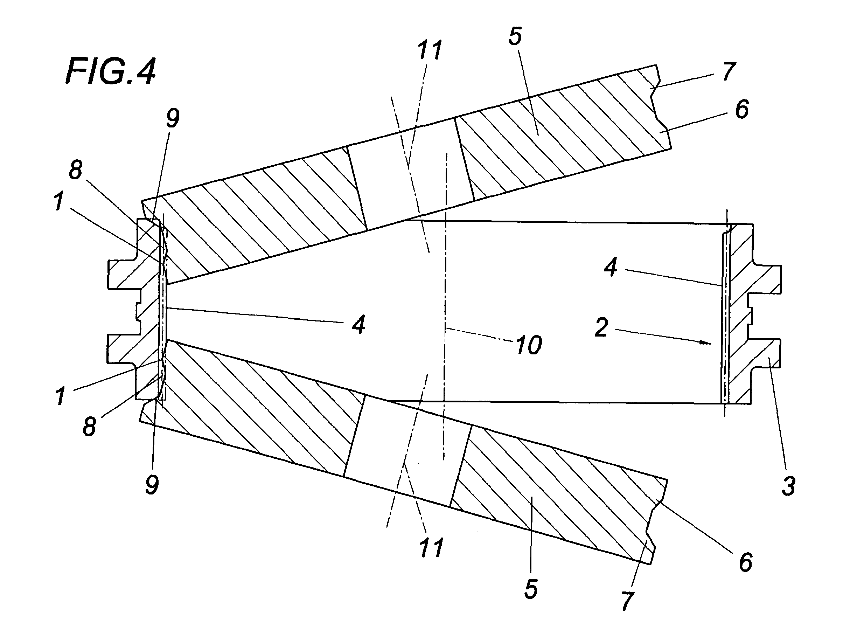

In der Fig. 4 ist die gegensinnige Neigung der Rollwerkzeuge 5 dargestellt. Diese gegensinnige Neigung der Drehachsen 11 in Bezug auf die Achse 10 der Schaltmuffe 3 erlaubt für die Formung der stirnseitigen Zahnabschnitte 8 symmetrische Verhältnisse. Außerdem kann eine über die gesamte sich von Stirnseite zu Stirnseite erstreckende Länge der Zähne durchgehende Profilform durch die beiden Rollwerkzeuge 5 ähnlich dem Rollwerkzeug 5 nach der Fig. 1 erreicht werden, was für eine über die Länge durchgehend gratfreie Zahnausbildung vorteilhaft sein kann.

## Patentansprüche

1. Verfahren zur Hinterlegung der Innenverzahnung (2) einer pulvermetallurgisch hergestellten Schiebemuffe (3) für ein Schaltgetriebe, wobei die Hinterlegungen (1) der stirnseitige Dachschrägen (9) bildenden Zähne (4) mit Hilfe eines Rollwerkzeugs (5) durch ein Hinterrollen unter plastischer Materialverdrängung aus dem Hinterlegungsbereich geformt werden, **dadurch gekennzeichnet, dass** mit Hilfe des Rollwerkzeugs (5) für die Formung der Hinterlegungen (1) zugleich die durch die Hinterlegungen (1) begrenzten, stirnseitigen Zahnabschnitte (8) unter Ausformung und/oder Kalibrierung der zugehörigen Dachschrägen (9) kalibriert werden.

2. Verfahren nach Anspruch 1, **dadurch gekennzeichnet, dass** das Rollwerkzeug (5) oszillierend an die Innenverzahnung (2) der Schiebemuffe (3) angedrückt wird.

3. Verfahren nach Anspruch 1 oder 2, **dadurch gekennzeichnet, dass** die Drehachse (11) des Rollwerkzeugs (5) und die Drehachse (10) der Schiebemuffe (3) miteinander einen spitzen Winkel einschließen.

4. Vorrichtung zur Hinterlegung der Innenverzahnung einer pulvermetallurgisch hergestellten Schiebemuffe für ein Schaltgetriebe mit einem entsprechend der Hinterlegung profilierten Rollwerkzeug, **dadurch gekennzeichnet, dass** das Rollwerkzeug (5) einen an die Profilform für die Hinterlegung (1) anschließenden Profilabschnitt (7) aufweist, der der Endform der durch die Hinterlegung (1) begrenzten, stirnseitigen Zahnabschnitte (8) der Innenverzahnung (2) entspricht.

## Claims

1. Method for backing the inside toothing (2) of a sliding sleeve (3), produced by means of powder metallurgy, for a manual transmission, wherein the backings (1) of the teeth (4) forming the end-face pitches (9) are formed with the aid of a rolling tool (5) by back-rolling accompanied by plastic displacement of material from the backing region, **characterised in that** with the aid of the rolling tool (5) for forming the backings (1), the end-face tooth portions (8) defined by the backings (1) are calibrated at the same time whilst the associated pitches (9) are being shaped and/or calibrated.

2. Method as claimed in claim 1, **characterised in that** the rolling tool (5) is pressed in an oscillating manner onto the inside toothing (2) of the sliding sleeve (3).

3. Method as claimed in claim 1 or 2, **characterised in that** the axis of rotation (11) of the rolling tool (5) and the axis of rotation (10) of the sliding sleeve (3) form an acute angle with each other.

4. Device for backing the inside toothing of a sliding sleeve, produced by means of powder metallurgy, for a manual transmission having a rolling tool profiled to correspond to the backing, **characterised in that** the rolling tool (5) has a profile portion (7) adjoining the profile shape for the backing (1), which portion corresponds to the final shape of the end-face tooth portions (8) of the inside toothing (2) defined by the backing (1).

## Revendications

1. Procédé pour le renforcement de la denture intérieure (2) d'un manchon coulissant (3), fabriqué par métallurgie des poudres, pour une boîte de vitesses, les dépouilles (1) des dents (4) formant les faces inclinées (9), côté frontal, étant formées à l'aide d'un outil de roulage (5) par galetage, avec refoulement de matériau plastique à partir de la zone de dépouille, **caractérisé en ce qu'**à l'aide de l'outil de roulage (5) pour le formage des dépouilles (1), les sections de denture (8), côté frontal, limitées par les dépouilles (1) sont en même temps calibrées avec profilage et/ou calibrage des faces inclinées (9) correspondantes.

2. Procédé selon la revendication 1, **caractérisé en ce que** l'outil de roulage (5) est appuyé, de manière oscillante, au niveau de la denture intérieure (2) du manchon coulissant (3).

3. Procédé selon la revendication 1 ou 2, **caractérisé en ce que** l'axe de rotation (11) de l'outil de roulage (5) et l'axe de rotation (10) du manchon coulissant (3) enferment ensemble un angle aigu.

4. Dispositif pour le renforcement de la denture intérieure d'un manchon coulissant, fabriqué par métallurgie des poudres, pour une boîte de vitesses, avec un outil de roulage profilé correspondant à la dépouille, **caractérisé en ce que** l'outil de roulage (5) présente une section profilée (7) raccordée au niveau du profilé pour la dépouille (1) qui correspond à la forme finale des sections de denture (8), côté frontal, limitées par la dépouille (1), de la denture intérieure (2).
